# EUROPEAN PATENT SPECIFICATION

(11) **EP 3 400 171 B1**
(45) Date of publication and mention of the grant of the patent: **31.03.2021**
(21) Application number: 16888815.4
(22) Date of filing: 05.02.2016
(51) Int. Cl.: B64C 27/08, B64D 47/08, G03B 15/00, B64C 39/02

(54) **MULTIROTOR AIRCRAFT**
MULTIROTORFLUGZEUG
AÉRONEF À ROTORS MULTIPLES

(43) Date of publication of application: 14.11.2018
(73) Proprietor: Autel Robotics Co., Ltd., Shenzhen, Guangdong 518055 (CN)
(72) Inventor: SCHWARZBACH, Marc, Shenzhen, Guangdong 518055 (DE); WANG, Jian, Shenzhen, Guangdong 518055 (CN); RAFFLER, Thomas, Shenzhen, Guangdong 518055 (DE)
(74) Representative: Gulde & Partner
(86) International application number: PCT/CN2016/073658
(87) International publication number: WO 2017/132990

(56) References cited:
- WO-A2-2014/062276
- WO-A2-2014/062276
- CN-A- 103 786 878
- CN-A- 104 176 265
- CN-A- 104 881 049
- CN-U- 203 996 886
- CN-U- 204 290 620
- CN-U- 204 452 950
- DE-A1-102008 025 607
- DE-A1-102008 025 607
- KR-B1- 101 564 380
- US-A1- 2013 206 915
- US-B1- 9 030 149

## Description

### TECHNICAL FIELD OF THE INVENTION

The present invention relates generally to an unmanned aerial vehicle, and in particular to a multirotor aircraft.

### BACKGROUND OF THE INVENTION

To allow unobstructed 360 degree view, either the camera system of the multirotor aircraft is moved below the level of the landing structure or the landing structure is moved over the level of camera view. This is performed by a moving frame, or a retractable landing gear. However, in these two cases, the camera is not safe at takeoff or landing, and is hard to reach, especially when the change of the lens is desired. Further, the angle for filming is also limited in these two cases.

Without one of these methods, the whole fight system has to be rotated, which limits dynamic and the possibility to control the camera independently of flight control of the platform. A case of mounting the camera looking to the front allows for views up and down, while still requires yaw of the whole system for camera yaw.

The German patent application DE102008025607A1 discloses an aircraft, where the aircraft has a control device including a central assembly platform and a thrust module and provided for independent dynamic controlling of a position of the thrust module and a centre of gravity position of the aircraft.

The PCT patent application WO2014062276A2 discloses a vehicle propellable through fluids comprising a main work section and a plurality of propulsion units.

The US patent US9030149B1 discloses systems and methods for supporting and articulating a payload using stabilization platform.

The Chinese patent application CN104881049A discloses an unmanned aerial vehicle with a gimbal.

### SUMMARY OF THE INVENTION

A multirotor aircraft is provided, so that the camera is safe at takeoff and landing, and has more angles to film to and is easy to reach.

According to one aspect of the present invention, a multirotor aircraft is provided, in accordance with claim 1.

Preferably, body and frame are connected by a bearing.

Preferably, the frame comprises a shaft and four arms, and two of the four arms are connected to one end of the shaft and the other two of the four arms are connected to the other end of the shaft.

Preferably, the multirotor propulsion system comprises four actuator assemblies, wherein each of the four actuator assemblies is mounted on the end of each arm which is far away from the shaft of the frame.

Preferably, the multirotor propulsion system comprises eight actuator assemblies, wherein the end of each arm which is far away from the shaft of the frame is mounted with two actuator assemblies.

Preferably, the camera assembly is disposed on the top of the main body.

Preferably, the camera assembly is configured to allow for continuous compensation of body rotation or to work in three rotation modes separately with switching motion.

Preferably, the drive system comprises a rotary angle sensor for sensing the angle between the body and the frame.

Preferably, the rotary angle sensor comprises a variable resistor, an optical system or two inertial measurement systems disposed on the body and the frame respectively.

Preferably, the multirotor aircraft comprises a shock absorbing mechanism coupled with the drive system.

Preferably, the shock absorbing mechanism comprises a coupling. In accordance with claim 1, the multirotor aircraft further comprises a controller electrically connected to the drive system and configured to control the drive system to drive the body to rotate against the frame automatically or according to a user command.

Preferably, the controller is further configured to initiate the rotation of the body when a predetermined latitude is reached by the multirotor aircraft.

According to claim 1, the controller is further configured to keep the body in a camera up position at takeoff and landing.

Preferably, the controller is further electrically connected to the camera assembly and further configured to control the camera assembly to stabilize and/or point the camera automatically or according to a user command.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:
FIG. 1 illustrates an isometric view of a multirotor aircraft in accordance with an embodiment of the present invention;
FIG.2 illustrates a side view of the multirotor aircraft of FIG.1 with the body rotated to a camera up position, in accordance with an embodiment of the present invention;
FIG.3 illustrates a top view of the multirotor aircraft of FIG.1 with the body rotated to a camera front position, in accordance with an embodiment of the present invention;
FIG.4 illustrates a side view of the multirotor aircraft of FIG.1 with the body rotated to a camera down position, in accordance with an embodiment of the present invention;
FIG.5 illustrates an isometric view of a frame of the multirotor aircraft of FIG.1 with four actuator assemblies, in accordance with an embodiment of the present invention;
FIG.6 illustrates an isometric view of a frame of the multirotor aircraft of FIG.1 with eight actuator assemblies, in accordance with an embodiment of the present invention; and
FIG7 illustrates an isometric view of a body of the multirotor aircraft of FIG.1, in accordance with an embodiment of the present invention.

### DETAILED DESCRIPTION OF THE INVENTION

In the following detailed description, numerous specific details are set forth in order to provide a thorough understanding of the invention. However, it will be understood by those skilled in the art that the present invention may be practiced without these specific details. In other instances, well-known method, procedures, components and circuits have not been described in detail so as not to obscure the present invention.

Embodiments of the present invention provide a multirotor aircraft. By mounting the camera system to a rotating body, the camera is safe at takeoff and landing, has more angles to film to (360° both up and down and forward) and is easy to reach. All benefits of existing systems allowing 360-degree view in the horizontal plane are also covered.

As used herein, the terms 'upper', 'lower', 'vertical', 'horizontal' and other similar position-indicating terms are used with reference to the multirotor aircraft in its normal operation mode, and should not be considered limiting.

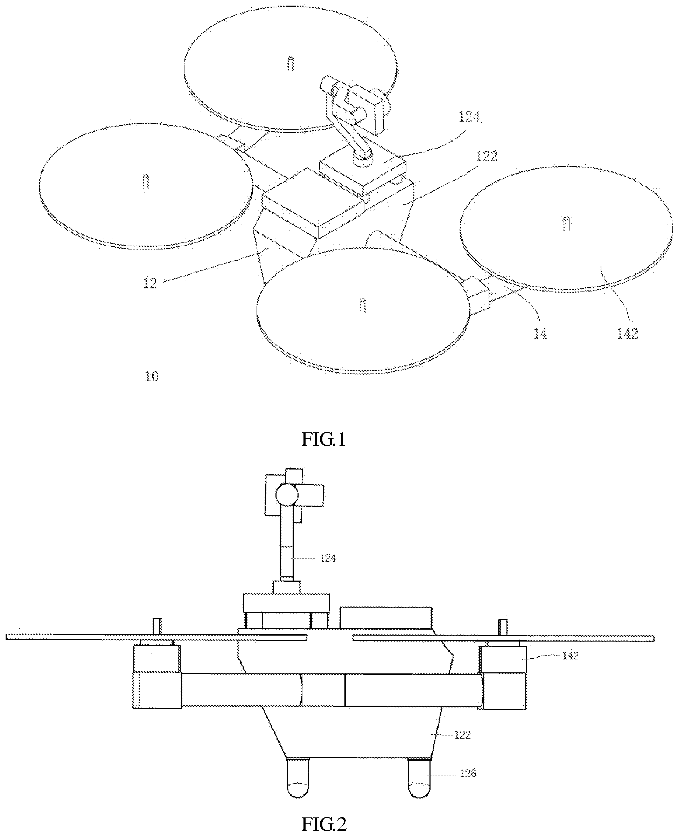

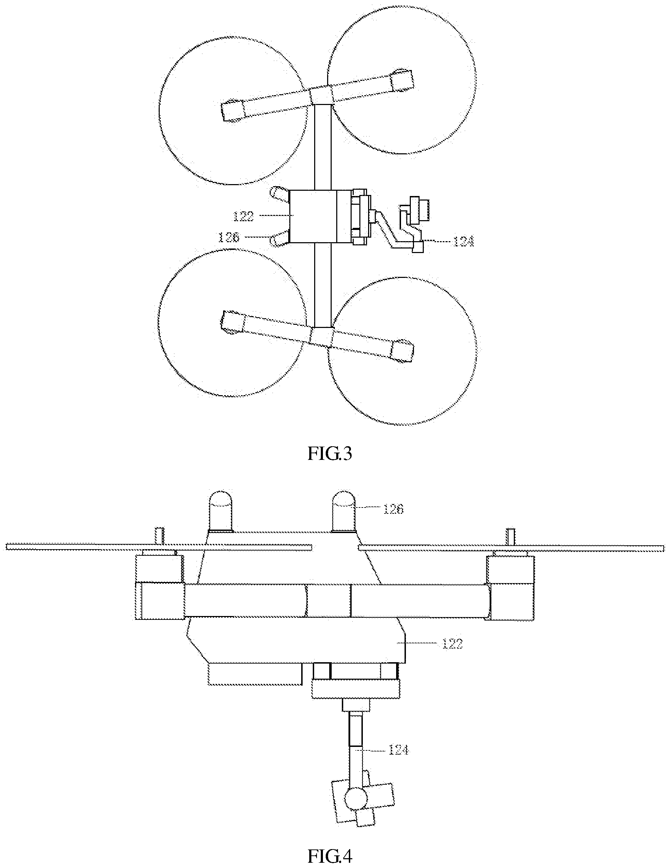

FIG. 1 illustrates an isometric view of a multirotor aircraft in accordance with an embodiment of the present invention. As illustrated in FIG.1, the multirotor aircraft 10 comprises, according to claim 1, a body 12 and a frame 14 connected to the body 12. The body 12 comprises a main body 122 and a camera assembly with a camera 124 coupled to the main body 122. The frame 14 comprises a multirotor propulsion system 142 for propelling the aircraft. The multirotor aircraft 10 further comprises a drive system coupled with the body 12 and the frame 14, not shown, for driving the body 12 to rotate against the frame 14. In accordance with claim 1, J Z the body 12 can be rotated against the frame 14 by the driving system by at least 180 degrees and the body 12 may be rotated to a camera up position, a camera front position or a camera down position, as illustrated by FIG.2-4 respectively. Of course, the body 12 may be rotated to other positions or angles. As a result, more angles for filming can be attained.

The drive system comprises an actuator and a transmission device coupled with the actuator. In particular, the actuator may be coupled with the body 12 and the transmission device may be coupled with the frame 14 or vice versa, so that the actuator may drive, through the transmission device, the body 12 to rotate against the frame 14. The drive system may comprise a gear drive system, a belt drive system or a brushless direct drive system. Take the gear drive system for example, it may comprise an actuator coupled to the frame 14 and a gear coupled to the body 12 or vice versa, and the actuator is used to drive the gear, so as to drive the body 12 to rotate against the frame 14. The other two drive systems may be configured in a similar way. The actuator may comprise electric motor, mechanical actuator, hydraulic actuator, pneumatic actuator, or the like. Electric motors may include magnetic, electrostatic or piezoelectric motors.

The drive system may further comprise a rotary angle sensor, for sensing the angle between the body 12 and the frame 14. The rotary angle sensor may comprise a variable resistor, an optical system or two inertial measurement systems disposed on the body and the frame respectively. The sensed angle between the body 12 and the frame 14 may be used for flight control and/or camera assembly control.

In some embodiments, the body 12 and the frame 14 may be connected by a bearing. For example, as illustrated in FIG.1, the body 12 and the frame 14 may be connected by two bearings. In particular, the main body 122 may comprise two holes disposed on two opposite side faces, two bearings may be mounted in these two holes, and a shaft of the frame 14 may go through the two bearings. The locations of the two bearings as illustrated in FIG.1 are exemplary and can be any other suitable locations. In other examples, the body 12 and the frame 14 may be connected by less or more bearings. The bearing can be a rolling bearing or a sliding bearing.

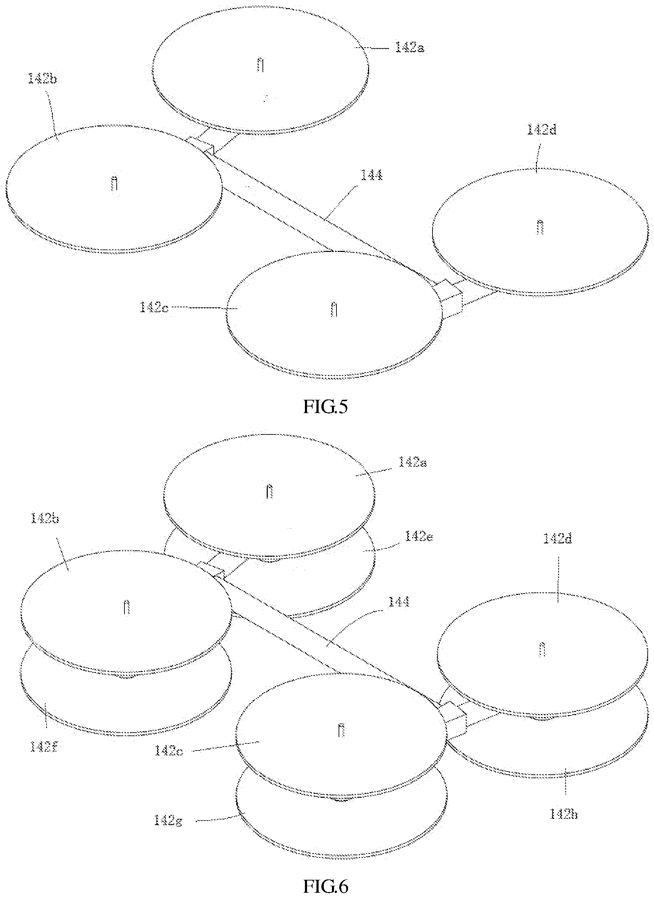

FIG.5 illustrates an isometric view of a frame of the multirotor aircraft of FIG.1 with four actuator assemblies, in accordance with an embodiment of the present invention. As illustrated in FIG.5, the frame 14 may comprise a lateral 144 and four arms, and two of the four arms may be connected to one end of the shaft 144 and the other two of the four arms may be connected to the other end of the shaft 144. Further, the multirotor propulsion system 142 may comprise four actuator assemblies 142a-d, and each of the four actuator assemblies 142a-d may be mounted on the end of each arm which is far away from the shaft 144. In particular, each of the four actuator assemblies may be removably coupled to the top surface of the end of each arm which is far away from the shaft 144, as illustrated in FIG.5, or each of the four actuator assemblies may be removably coupled to the bottom surface of the end of each arm which is far away from the shaft.

FIG.6 illustrates a side view of a frame of the multirotor aircraft of FIG.1 with eight actuator assemblies, in accordance with an embodiment of the present invention. As illustrated in FIG.6, the multirotor propulsion system 142 may comprise eight actuator assemblies 142a-h, and the end of each arm which is far away from the shaft 144 is mounted with two of the eight actuator assemblies. In particular, one actuator assembly may be removably coupled with the top surface of the end of each arm which is far away from the shaft 144 and the other actuator assembly may be removably coupled with the bottom surface of the same end. Through the implementation of a redundant setup using eight actuator assemblies, the safety of the multirotor aircraft can be improved.

In various embodiments, the actuator assembly may comprise an actuator and a rotor wing or blade coupled to the actuator, and the actuator is used to drive the rotor wing or blade. As discussed above, the actuator may comprise electric motor, mechanical actuator, hydraulic actuator, pneumatic actuator, or the like. Electric motors may include magnetic, electrostatic or piezoelectric motors.

In some embodiments, the frame 14 may have an asymmetric shape. In one example, the shaft and each of the front two arms of the frame 14 may form an obtuse angle, and the shaft and each of the back two arms of the frame 14 may form an acute angle. In another example, the shaft and each of the front two arms of the frame 14 may form an obtuse angle, and the shaft and each of the back two arms of the frame 14 may form a right angle or a smaller obtuse angle. In this way, a better view angle for the camera can be obtained.

In some embodiments, the frame 14 may have an asymmetric shape. In one example, the shaft and each of the four arms of the frame 14 may form a right angle. In another example, the shaft and each of the four arms of the frame 14 may form the same acute angle or obtuse angle.

In some embodiment, each arm of the frame 14 may be removably coupled to the shaft of the frame 14. For example, during assembly of the frame 14, each arm may be removably coupled to the shaft via fasteners such as screw, bolt, buckle, clamp, clasp, latch, hook, nail, pin, strap, cable, or the like. Such removable coupling can be used to facilitate maintenance of the multirotor aircraft. When maintenance is required, each arm may be decoupled from the shaft. In another embodiment, each arm and the shaft of the frame may be welded or otherwise permanently held together.

In various embodiments, any individual or combination of the components that form the frame 14 can be manufactured using any suitable technique such injection molding, additive manufacturing (3-D printing) techniques, or the like. For example, each arm and the shaft of the frame 14 can be manufactured individually and welded, fastened or otherwise combined to form the frame. As another example, the two arms connected to one end of the shaft can be integrally manufactured as one piece, and the other two arms connected to the other end of the shaft can be integrally manufactured as one piece. Then the two integrally manufactured pieces and the shaft 141 can be combined (via welding, fastener, etc.) to from the frame 14. As yet another example, the frame 14 can be integrally manufactured, for example, using injection molding or additive manufacturing techniques.

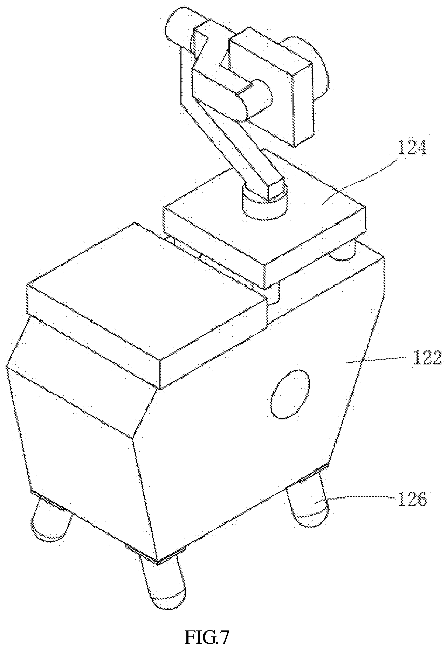

FIG7 illustrates an isometric view of a body of the multirotor aircraft of FIG.1, in accordance with an embodiment of the present invention. As illustrated in FIG.7, the camera assembly 124 may be disposed on the top of the main body 122. In particular, the camera assembly 124 may be removably coupled to the front part of the top surface of the main body 122. Of cause, the camera assembly 124 can also be disposed in any other suitable place. The camera assembly 124 may be designed either to be able to allow for continuous compensation of body rotation or to work in three rotation modes separately with switching motion.

According to claim 1, the body further comprises landing structs 126 coupled to the bottom of the main body 122, in order to protect the main body 122 at landing. The landing structs 126 may have the shape as shown in FIG. 7 or any other suitable shape. In FIG.7, there are four landing structs, however, other number of landing structs is possible, for example one, two three or more than four landing structs. The landing structs 126 may be removably coupled to the bottom of the main body 122 in any suitable configuration.

In accordance with claim 1 some parts of the body are fixed to the frame and other parts of the body may be rotated against the frame by the drive system. The other parts of the body comprise the camera assembly.

In some embodiments, the multirotor may further comprise a damping system. The damping system may be used to optimize the damping when the the body is in the camera up position. As an example, the damping system may comprise a damper. The damper may be pushed from inside the body to the base of the camera assembly 124 to support the camera assembly 124, when the body is in the camera up position. The pushing of the damper may be actuated by an additional actuator or may be actuated by the drive system through a mechanism connected to the drive system.

In some embodiments, the multirotor aircraft may further comprise a shock absorbing system for absorbing the shock loads to the drive system, e.g. in case of a hard landing. As an example, the shock absorbing system may comprise a coupling connected to the drive system.

The multirotor aircraft may further comprise a controller configured to control the drive system to drive the body to rotate against the frame automatically or according to a user command. The controller may be electrically connected to the drive system. In particular, the controller may be configured to control the drive system to keep the body in the camera up position as shown in FIG. 2 at takeoff and landing. By keeping the body in the camera up position at takeoff and landing, the camera is in a safe position at takeoff and landing and is easy to reach on the ground. The controller may further be configured to control the drive system to initiate the rotation of the body when a predetermined latitude is reached by the multirotor aircraft, if filming to the front or down is desired. In flight, the controller may be configured to control the drive system to rotate the body to a desired angle or position by user command or automatically, for example to the camera front position or camera down position or any other desired position or angle. Therefore, full unobstructed 360° yaw field of view of the camera in the upper or lower hemisphere can be obtained. The controller may also be electrically connected to the camera assembly and configured to control the camera assembly to stabilize and/or point the camera as desired.

The body may be mounted with one or more electrical component adapted to control various aspects of the operation of the multirotor aircraft. As used herein, the term 'electrical component' refers to any component that provides, uses or transmits electricity. Such electrical components can include an energy source (e.g., battery), flight control or navigation module, GPS module (e.g., GPS receiver or transceivers), inertial measurement unit (IMU) module, communication module (e.g., wireless transceiver), electronic speed control (ESC) module adapted to control an actuator (e.g., electric motor), actuator(s) such as an electric motor used to actuate a propeller of the multirotor aircraft, electrical wirings and connectors, and the like. In some embodiments, some of the electrical components may be located on an integrated electrical unit such as a circuit board or module. In some embodiments, some of the electrical components may be located on one or more circuit modules. Each circuit module can include one or more electrical components. For example, the circuit module can include the flight control module that includes one or more processors (such as implemented by a field-programmable gate array (FPGA)) for controlling key operation of the multirotor aircraft. As another example, the same or a different circuit module can also include an IMU module for measuring the velocity, orientation and gravitational forces of the multirotor aircraft. The IMU module can include one or more accelerometers and/or gyroscopes. As another example, the same or a different circuit module can also include a communication module for remotely communicating with a remote control device. For example, the communication module can include a wireless (e.g., radio) transceiver. The communication module can be provided with button or buttons and corresponding indicator light that is spaced apart from the buttons. The buttons and the indicator light may be used for facilitating communication between the multirotor aircraft and a remote control device. For example, the buttons may be used to adjust the frequency channel used by the multirotor aircraft and the indicator light can be used to indicate the success and/or failure of the establishment of a communication channel between the multirotor aircraft and the remote control device.

The fight control module is typically a key component or 'brain' of a multirotor aircraft. For example, the flight control module can be configured to estimate the current velocity, orientation and/or position of the multirotor aircraft based on data obtained from visual sensors (e.g., cameras), IMU, GPS receiver and/or other sensors, perform path planning, provide control signals to actuators to implement navigational control and the like. As another example, the flight control module can be configured to issue control signals to adjust the state of the multirotor aircraft based on remotely received control signals.

The multirotor aircraft according to various embodiments of the present invention can provide the following advantages: full unobstructed 360° yaw field of view of the camera in the upper or lower hemisphere; camera in a safe position at takeoff and landing; camera easy to reach on the ground in case of e.g. lens change; possibility to extend to a eight rotor system; only one axis moving, which increases robustness, e.g. compared with the existing multirotor aircraft with a moving frame or a retractable landing gear.

While preferred embodiments of the present invention have been shown and described herein, it will be obvious to those skilled in the art that such embodiments are provided by way of example only. Numerous variations and changes will now occur to those skilled in the art without departing from the present invention. It should be understood that various alternatives to the embodiments of the invention described herein may be employed in practicing the invention. It is intended that the following claims define the scope of the invention and that methods and structures within the scope of these claims are covered hereby.

## Claims

1. A multirotor aircraft, comprising:
a body (12) comprising a main body (122) and a camera assembly with a camera (124) coupled to the main body (122); and
a frame (14) connected to the body (12), wherein the frame (14) comprises a multirotor propulsion system (142); wherein
the multirotor propulsion system (142) is configured to propel the multirotor aircraft;
the multirotor aircraft further comprising:
a drive system coupled with the body (12) and the frame (14), wherein the drive system is configured to drive the body (12) to rotate against the frame (14);
wherein the drive system comprises an actuator and a transmission device coupled with the actuator;
wherein the drive system is configured to drive a part of the body (12) to rotate against the frame (14), wherein the part of the body (12) comprises the camera assembly, other part of the body (12) being fixed to the frame (14);
wherein the body (12) further comprises landing structs (126) coupled to the bottom of the main body (122); wherein the multirotor aircraft further comprises:
a controller electrically connected to the drive system and configured to control the drive system to drive the body (12) to rotate against the frame (14) automatically or according to a user command; wherein, the controller is further configured to keep the body (12) in a camera up position at takeoff and landing;
the body (12) is rotatable against the frame (14) by at least 180 degree; the body is rotatable in a camera up position, a camera front position or a camera down position.

2. The multirotor aircraft of claim 1, wherein,
the body (12) and the frame (14) are connected by a bearing.

3. The multirotor aircraft of claim 1, wherein,
the frame (14) comprises a shaft (144) and four arms, wherein two of the four arms are connected to one end of the shaft (144) and the other two of the four arms are connected to the other end of the shaft (144).

4. The multirotor aircraft of claim 3, wherein
the multirotor propulsion system (142) comprises four actuator assemblies (142a-d), wherein each of the four actuator assemblies (142a-d) is mounted on the end of each arm which is far away from the shaft (144) of the frame (14).

5. The multirotor aircraft of claim 3, wherein
the multirotor propulsion system (142) comprises eight actuator assemblies (142a-h), wherein the end of each arm which is far away from the shaft (144) of the frame (14) is mounted with two actuator assemblies.

6. The multirotor aircraft of claim 1, wherein,
the camera assembly is disposed on the top of the main body (122).

7. The multirotor aircraft of claim 1 or 6, wherein,
the camera assembly is configured to allow for continuous compensation of body rotation or to work in three rotation modes separately with switching motion.

8. The multirotor aircraft of claim 1, wherein,
the drive system comprises a rotary angle sensor for sensing the angle between the body (12) and the frame (14).

9. The multirotor aircraft of claim 8, wherein,
the rotary angle sensor comprises a variable resistor, an optical system or two inertial measurement systems disposed on the body (12) and the frame (14) respectively.

10. The multirotor aircraft of claim 1, further comprising:
a shock absorbing mechanism coupled with the drive system.

11. The multirotor aircraft of claim 10, wherein,
the shock absorbing mechanism comprises a coupling.

12. The multirotor aircraft of claim 1, wherein,
the controller is further configured to initiate rotation of the body (12) when a predetermined latitude is reached by the multirotor aircraft.

13. The multirotor aircraft of claim 1, wherein,
the controller is electrically connected to the camera assembly and configured to control the camera assembly to stabilize and/or point the camera (124) automatically or according to a user command.

## Patentansprüche

1. Multirotorflugzeug, umfassend:
einen Körper (12), der einen Hauptkörper (122) und eine Kameraanordnung mit einer an den Hauptkörper (122) gekoppelten Kamera (124) umfasst; und
einen mit dem Körper (12) verbundenen Rahmen (14), wobei der Rahmen (14) ein Multirotorantriebssystem (142) umfasst; wobei
das Multirotorantriebssystem (142) dazu ausgelegt ist, das Multirotorflugzeug anzutreiben;
wobei das Multirotorflugzeug ferner umfasst:
ein Antriebssystem, das mit dem Körper (12) und dem Rahmen (14) gekoppelt ist, wobei das Antriebssystem dazu ausgelegt ist, den Körper (12) dazu anzutreiben, sich an dem Rahmen (14) zu drehen;
wobei das Antriebssystem ein Aktor und eine mit dem Aktor gekoppelte Getriebevorrichtung umfasst;
wobei das Antriebssystem dazu ausgelegt ist, einen Teil des Körpers (12) dazu anzutreiben, sich an dem Rahmen (14) zu drehen, wobei der Teil des Körpers (12) die Kameraanordnung umfasst, wobei ein anderer Teil des Körpers (12) an dem Rahmen (14) fixiert ist;
wobei der Körper (12) ferner Landestreben (126) umfasst, die mit der Unterseite des Hauptkörpers (122) gekoppelt sind; wobei
das Multirotorflugzeug ferner eine Steuerung umfasst, die elektrisch mit dem Antriebssystem verbunden und dazu ausgelegt ist, das Antriebssystem zu steuern, um den Körper (12) dazu anzutreiben, sich an dem Rahmen (14) automatisch oder entsprechend einem Benutzerbefehl zu drehen; wobei die Steuerung ferner dazu ausgelegt ist, den Körper (12) während des Starts und der Landung in einer Position zu halten, in der die Kamera nach oben gerichtet ist;
der Körper (12) an dem Rahmen (14) um mindestens 180 Grad drehbar ist; der Körper in eine Position, in der die Kamera nach oben gerichtet ist, eine Position, in der die Kamera nach vorn gerichtet ist, oder eine Position, in der die Kamera nach unten gerichtet ist, drehbar ist.

2. Multirotorflugzeug nach Anspruch 1, wobei
der Körper (12) und der Rahmen (14) durch ein Lager verbunden sind.

3. Multirotorflugzeug nach Anspruch 1, wobei
der Rahmen (14) eine Welle (144) und vier Arme umfasst, wobei zwei der vier Arme mit einem Ende der Welle (144) verbunden sind und die anderen zwei der vier Arme mit dem anderen Ende der Welle (144) verbunden sind.

4. Multirotorflugzeug nach Anspruch 3, wobei
das Multirotorantriebssystem (142) vier Aktoranordnungen (142a-d) umfasst, wobei jede der vier Aktoranordnungen (142a-d) an jenem Ende jedes Arms angebracht ist, das weit von der Welle (144) des Rahmens (14) entfernt ist.

5. Multirotorflugzeug nach Anspruch 3, wobei
das Multirotorantriebssystem (142) acht Aktoranordnungen (142a-h) umfasst, wobei jenes Ende jedes Arms, das weit von der Welle (144) des Rahmens (14) entfernt ist, an zwei Aktoranordnungen angebracht ist.

6. Multirotorflugzeug nach Anspruch 1, wobei
die Kameraanordnung auf dem Hauptkörper (122) angeordnet ist.

7. Multirotorflugzeug nach Anspruch 1 oder 6, wobei
die Kameraanordnung dazu ausgelegt ist, einen kontinuierlichen Ausgleich der Körperdrehung zu ermöglichen oder in drei Drehmodi separat mit Schaltbewegung zu arbeiten.

8. Multirotorflugzeug nach Anspruch 1, wobei
das Antriebssystem einen Drehwinkelsensor zum Erfassen des Winkels zwischen dem Körper (12) und dem Rahmen (14) umfasst.

9. Multirotorflugzeug nach Anspruch 8, wobei
der Drehwinkelsensor einen variablen Widerstand, ein optisches System oder zwei Inertialmesssysteme umfasst, die an dem Körper (12) bzw. an dem Rahmen (14) angeordnet sind.

10. Multirotorflugzeug nach Anspruch 1, ferner umfassend:
einen stoßdämpfenden Mechanismus, der mit dem Antriebssystem gekoppelt ist.

11. Multirotorflugzeug nach Anspruch 10, wobei
der stoßdämpfende Mechanismus eine Kupplung umfasst.

12. Multirotorflugzeug nach Anspruch 1, wobei
die Steuerung ferner dazu ausgelegt ist, eine Drehung des Körpers (12) auszulösen, wenn von dem Multirotorflugzeug ein vorab festgelegter Breitengrad erreicht wird.

13. Multirotorflugzeug nach Anspruch 1, wobei
die Steuerung elektrisch mit der Kameraanordnung verbunden und dazu ausgelegt ist, die Kameraanordnung zu stabilisieren und/oder die Kamera (124) automatisch oder entsprechend einem Benutzerbefehl auszurichten.

## Revendications

1. Aéronef à rotors multiples, comprenant :
un corps (12) comprenant un corps principal (122) et un ensemble de caméra avec une caméra (124) accouplée au corps principal (122) ; et
un châssis (14) relié au corps (12), le châssis (14) comprenant un système de propulsion à rotors multiples (142) ;
le système de propulsion à rotors multiples (142) étant conçu pour propulser l'aéronef à rotors multiples ;
l'aéronef à rotors multiples comprenant en outre :
un système d'entraînement accouplé avec le corps (12) et avec le châssis (14), le système d'entraînement étant conçu pour entraîner le corps (12) afin qu'il pivote par rapport au châssis (14) ;
le système d'entraînement comprenant un actionneur et un dispositif de transmission accouplé avec l'actionneur ;
le système d'entraînement étant conçu pour entraîner une partie du corps (12) afin qu'elle pivote par rapport au châssis (14), la partie du corps (12) comprenant l'ensemble de caméra, l'autre partie du corps (12) étant fixée au châssis (14) ;
le corps (12) comprenant en outre des structures d'atterrissage (126) accouplées à la partie inférieure du corps principal (122) ;
l'aéronef à rotors multiples comprenant en outre :
un contrôleur connecté électriquement au système d'entraînement et configuré pour commander au système d'entraînement d'entraîner le corps (12) afin qu'il pivote par rapport au châssis (14), automatiquement ou en fonction d'une commande d'utilisateur ; le contrôleur étant en outre configuré pour conserver le corps (12) dans une position avec caméra vers le haut au décollage et à l'atterrissage ;
le corps (12) pouvant pivoter par rapport au châssis (14) sur au moins 180 degrés ; le corps pouvant pivoter dans une position avec caméra vers le haut, une position avec caméra vers l'avant et une position avec caméra vers le bas.

2. Aéronef à rotors multiples selon la revendication 1,
le corps (12) et le châssis (14) étant raccordés par un palier.

3. Aéronef à rotors multiples selon la revendication 1,
le châssis (14) comprenant un arbre (144) avec quatre bras, deux des quatre bras étant raccordés à une extrémité de l'arbre (144) et les autres deux bras parmi les quatre bras étant raccordés à l'autre extrémité de l'arbre (144).

4. Aéronef à rotors multiples selon la revendication 3,
le système de propulsion à rotors multiples (142) comprenant quatre ensembles d'actionneurs (142a-d), chacun des quatre ensembles d'actionneurs (142a-d) étant monté sur l'extrémité de chaque bras qui est éloignée de l'arbre (144) du châssis (14).

5. Aéronef à rotors multiples selon la revendication 3,
le système de propulsion à rotors multiples (142) comprenant huit ensembles d'actionneurs (142a-h), l'extrémité de chaque bras qui est éloignée de l'arbre (144) du châssis (14) étant munie de deux ensembles d'actionneurs.

6. Aéronef à rotors multiples selon la revendication 1,
l'ensemble de caméra étant disposé sur la partie supérieure du corps principal (122).

7. Aéronef à rotors multiples selon la revendication 1 ou 6,
l'ensemble de caméra étant conçu pour permettre la compensation continue de la rotation du corps ou pour opérer dans trois modes de rotation séparément avec mouvement de commutation.

8. Aéronef à rotors multiples selon la revendication 1,
le système d'entraînement comprenant un capteur d'angle de rotation pour détecter l'angle entre le corps (12) et le châssis (14).

9. Aéronef à rotors multiples selon la revendication 8,
le capteur d'angle de rotation comprenant une résistance variable, un système optique ou deux systèmes de mesure d'inertie respectivement disposés sur le corps (12) et sur le châssis (14).

10. Aéronef à rotors multiples selon la revendication 1, comprenant en outre : un mécanisme d'absorption de chocs accouplé avec le système d'entraînement.

11. Aéronef à rotors multiples selon la revendication 10,
le mécanisme d'absorption de chocs comprenant un accouplement.

12. Aéronef à rotors multiples selon la revendication 1,
le contrôleur étant en outre configuré pour déclencher la rotation du corps (12) lorsqu'une latitude prédéterminée a été atteinte par l'aéronef à rotors multiples.

13. Aéronef à rotors multiples selon la revendication 1,
le contrôleur étant électriquement connecté à l'ensemble de caméra et étant configuré pour commander à l'ensemble de caméra de stabiliser et/ou de pointer la caméra (124) automatiquement ou en fonction d'une commande d'utilisateur.
